# NEUE EUROPÄISCHE PATENTSCHRIFT

(11) **EP 0 425 912 B2**
(45) Veröffentlichungstag und Bekanntmachung des Hinweises auf die Entscheidung über den Einspruch: **14.08.1996**
(45) Hinweis auf die Patenterteilung: 05.01.1994
(21) Anmeldenummer: 90120022.0
(22) Anmeldetag: 19.10.1990
(51) Int. Cl.: G01B 21/00, B23Q 17/00

(54) **Vorrichtung zum Anpassen einer numerischen Steuerung an Maschinen- und/oder Messsystem-Parameter**
Apparatus for the adjustment of a numerical control system to machine- and/or measuring system-parameters
Appareil d'adaptation d'un réglage numérique à paramètres de machines et/ou de systèmes de mesure

(30) Priorität: 02.11.1989 DE 3936452
(43) Veröffentlichungstag der Anmeldung: 08.05.1991
(73) Patentinhaber: Dr. Johannes Heidenhain GmbH, D-83292 Traunreut (DE)
(72) Erfinder: Spirkl, Martin, W-8261 Tittmoning (DE); Rothfeld, Rainer, W-8225 Traunreut (DE)

(56) Entgegenhaltungen:
- EP-A- 0 168 381
- DE-A- 2 540 412
- DE-A- 3 150 977
- DE-A- 3 336 854
- DE-A- 3 714 028
- GB-A- 2 045 443
- Maschinenparameter "Bosch CC 200 T", Prospekt Nr 3947/D1, November 1987
- Zeitschrift KEM, September 1985, Seiten 48, 52
- Technica 1/1982, Seiten 21-25

## Beschreibung

Bei Maschinen, die mit einer numerischen Steuerung und elektronischen Meßsystemen zur Positionsbestimmung versehen sind, müssen bei bzw. vor der Inbetriebnahme die sogenannten Maschinen- und/oder Meßsystemparameter in die Steuerung eingespeist werden, damit die numerische Steuerung sich diesen Parametern anpaßt oder ihnen angepaßt wird.

Ferner ist die Einspeisung von sogenannten Anwender-Parametern möglich, diese werden vom Maschinen-Hersteller festgelegt.

Die genannten Parameter werden in der Regel beim Endkunden in die leeren Speicher der NC-Steuerung manuell eingegeben. Die Eingabe ist kompliziert, weil beim Endkunden oftmals die notwendigen Meßmittel zur Ermittlung der maschinenspezifischen Parameter fehlen. Auch die meßsystemspezifischen Daten lassen sich vor Ort nur schwierig und mit hohem Zeitaufwand ermitteln und für die Parameter-Speicherung umsetzen.

Wenn die Parameter bereits ermittelt sind, können sie auf Datenspeichern wie Lochstreifen oder Magnetband gespeichert werden.

In dem Aufsatz "Ein flexibles Steuerungssystem" aus der Zeitschrift "Technica" 1/82, Seiten 21 bis 25 ist eine Steuerung für eine Maschine beschrieben. Diese Steuerung verfügt über ein standardmäßig eingebautes Digital-Cassetten-Gerät, über welches u.a. Maschinenparameter eingegeben werden können.

Ferner ist aus der DE-37 14 028-A1 bekannt, die Wegmeßeinrichtungen einer Maschine mit einer Präzisionsmeßeinrichtung in einer Eichphase zu vermessen. Die Differenz der Messungen werden von einem Kompensationsrechner als Korrekturwert ermittelt und dienen nach Abschluß der Eichphase zur Berichtigung der Meßwerte der Wegmeßeinrichtung, mit der die Maschine ausgerüstet ist. Der Kompensationsrechner kann dabei in einer beliebigen Komponente der Gesamtanordnung installiert sein.

Der Erfindung liegt die Aufgabe zugrunde, eine Vorrichtung mit einer numerischen Steuerung an Bearbeitungs- oder Meßmaschinen, die Längen- oder Winkelmeßsysteme aufweisen, zu schaffen, mit deren Hilfe die Anpassung einer NC-Steuerung an eine Maschine hinsichtlich der eingangs genannten Parameter vereinfacht wird.

Diese Aufgabe wird von einer Vorrichtung mit einer numerischen Steuerung an Bearbeitungs- oder Meßmaschinen, die Längen- oder Winkelmeßsysteme aufweisen, mit den Merkmalen des Anspruches 1 gelöst.

Vorteilhafte Ausführungen der Vorrichtung sind in den abhängigen Ansprüchen angegeben.

Die besonderen Vorteile der Vorrichtung liegen darin, daß die angesprochenen Parameter vorab ermittelt und in einem integrierten Informationsträger gespeichert sind. Dieser Informationsträger wird bei bzw. vor der Inbetriebnahme der Maschine ausgelesen, wobei der Informationsgehalt in die numerische Steuerung übertragen wird.

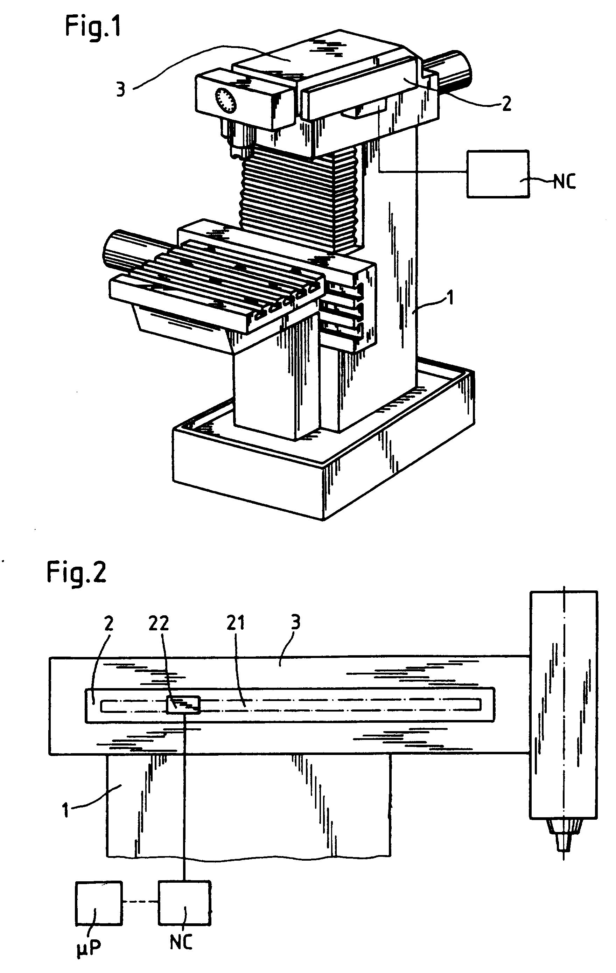

Die Figuren 1 und 2 zeigen Bearbeitungs- oder Meßmaschinen, an denen die erfindungsgemäße Vorrichtung angeordnet ist.

In Figur 1 wird eine Werkzeugmaschine 1 dargestellt, in deren Meßvorrichtungen 2 der Informationsträger 21 integriert ist.

Figur 2 zeigt den Spindelstock 3 der Werkzeugmaschine 1 als vergrößerten Ausschnitt.

Die weiteren ersichtlichen Einzelheiten der Werkzeugmaschine 1 werden nicht näher erläutert, da sie einerseits hinreichend bekannt sind und andererseits auch nicht zum Verständnis der Erfindung beitragen.

In der Meßvorrichtung 2 - welche eine herkömmliche lichtelektrische inkrementale Längenmeßeinrichtung sein kann, wie sie beispielsweise in der DE-OS 25 40 412 beschrieben ist - enthält eine zusätzliche Informationsspur 21 in optisch codierter Form alle Parameter, die zur Anpassung einer numerischen Steuerung NC an die Werkzeugmaschine 1 notwendig und/ oder wünschenswert sind.

In der Meßvorrichtung 2 ist zusätzlich zu den Elementen, die der Längenmessung dienen, eine Ablesevorrichtung 22 für die Informationsspur 21 vorgesehen.

Aus den in der Informationsspur enthaltenen Maschinen- und/oder Meßsystem-Parametern sind beispielsweise durch Probelauf zu ermitteln:
1. Die Erkennung der Gitterkonstante der Meßsysteme
2. Die Erkennung der Referenzmarken-Ausführung codiert/uncodiert
3. Die Erkennung der Verfahrrichtung
4. Die Erkennung der Zählrichtung
5. Die Ermittlung der Eilgang-Geschwindigkeit
6. Die Ermittlung der Beschleunigung
7. Die Ermittlung der Einfahr-Geschwindigkeit
8. Die Erkennung des Überschwingens
9. Die Einstellung der Polarität der Analog-Ausgangsspannung
10. Die Zuordnung der einzelnen Achsen

Beim Probelauf werden diese Informationen in die Steuerung NC eingespeist, die sich automatisch an diese (und auch andere, soweit sie in der Informationsspur abgespeichert waren) Parameter anpaßt. Die vorstehenden Aufzählung ist selbstverständlich nicht einschränkend, denn der Fachmann kann alle erforderlichen Informationen zur automatischen Anpassung in dem Informationsträger speichern.

Die Informationsspur 21 muß keineswegs in optisch codierter Form ausgeführt sein, selbstverständlich ist auch eine magnetische, kapazitive oder induktive Speicherung der Parameter möglich, wobei auch diese Aufzählung nicht den Anspruch auf Vollständigkeit erhebt.

Aus Figur 2 ist auch ersichtlich, daß die Informationsspeicherung in der Meßvorrichtung 2 nicht unbedingt in Form einer Informationsspur 21 erfolgen muß.

Denkbar ist auch ein integrierter mikroprozessorgesteuerter Speicher µP, der an die Steuerung NC angeschlossen ist und die notwendigen Informationen beinhaltet. In Figur 2 ist dies durch den Baustein µP angedeutet, der symbolisch an die Steuerung NC angeschlossen ist, sich körperlich aber in einem Baustein der Längenmeßvorrichtung 2 befindet.

## Patentansprüche

1. Vorrichtung mit einer numerischen Steuerung (NC) an Bearbeitungs- oder Meßmaschinen (1), die Längen- oder Winkelmeßsysteme aufweisen, mit einem Informationsträger (21, µP), wobei der Informationsträger (21, µP) integrierter Bestandteil des Längen- oder Winkelmeßsystems ist und zur Speicherung von Maschinen- und/oder Meßsystemparametern dient, wobei zwischen dem Informationsträger (21, µP) und der numerischen Steuerung (NC) eine Wirkverbindung besteht, und eine Betriebsart vorgesehen ist, in der die Information des Informationsträgers (21, µP) automatisch in die Steuerung (NC) übertragen wird und eine automatische Steuerungsanpassung an die obengenannten Parameter erfolgt, und daß nach dieser Anpassung eine Umschaltung der Steuerung (NC) auf Normalbetrieb erfolgt.

2. Vorrichtung nach Anspruch 1, dadurch gekennzeichnet, daß die Längen- oder Winkelmeßvorrichtung (2) wenigstens eine zusätzliche Informationsspur (21) als Informationsträger aufweist.

3. Vorrichtung nach Anspruch 2, dadurch gekennzeichnet, daß die in der Informationsspur (21) der Längen- oder Winkelmeßvorrichtung (2) enthaltenen Maschinen- und/oder Meßsystemparameter mittels eines Probelaufs in die Steuerung (NC) eingespeist werden.

4. Vorrichtung nach Anspruch 1, dadurch gekennzeichnet, daß als Informationsträger ein Mikroprozessor-Baustein (µP) vorgesehen ist.

## Claims

1. Arrangement with a numerical control system (NC) in processing or measuring machines (1) having length or angle measuring systems, with an information carrier (21, µP), wherein the information carrier (21, µP) is an integratcd component of the length or angle measuring system and serves to store machine and/or measuring system parameters there being a working connection between the information carrier (21, µP) and the numerical control system (NC) and a mode of operation being provided in which the information of the information carrier (21, UP) is transferred automatically to the control systcm (NC) and automatic adaptation of the control system to the above-mentioned parameters takes place, and after this adaptation a changeover of the control system (NC) to normal operation takes place.

2. Arrangement according to claim 1, characterized in that the length or angle measuring system (2) has at least one supplementary information track (21) as information carrier.

3. Arrangement according to claim 2, characterized in that the machine and/or mcasuring system parameters contained in the information track (21) of the length or angle measuring system (2) arc fed into the control system (NC) by means of a test run.

4. Arrangement according to claim 1, characterized in that a microprocessor unit (µP) is provided as information carrier.

## Revendications

1. Dispositif avec une commande numérique (NC) sur des machines-outils ou des machines (1) à mesurer pourvues de systèmes de mesure de longueurs ou d'angles (2) et avec un support d'informations (21, µP), dans lequel le support d'informations fait partie intégrante du système de mesure de longueur ou d'angle et sert au stockage de paramètres de la machine et/ou du système de mesure, dans lequel une liaison active existe entre le support d'informations (21, µP) et la commande numérique (NC), dans lequel il est prévu un mode de fonctionnement au cours duquel l'information du support d'informations (21, µP) est transmise automatiquement à la commande numérique (NC) et une adaptation automatique de la commande aux paramètres mentionnés est opérée et dans lequel la commande (NC) est commutée automatiquement en mode de fonctionnement normal après cette adaptation.

2. Dispositif selon la revendication 1, caractérisé par le fait que le système de mesure de longueurs ou d'angles (2) comporte au moins une piste d'informations (21) supplémentaire comme support d'informations.

3. Dispositif selon la revendication 2, caractérisé par le fait que les paramètres de la machine et/ou du système de mesure contenus dans la piste d'informations (21) du système de mesure de longueurs ou d'angles (2) sont introduites dans la commande numérique (NC) au moyen d'une marche d'essai.

4. Dispositif selon la revendication 2, caractérisé par le fait qu'il est prévu comme support d'informations un module micro-processeur (µP).
